# EUROPEAN PATENT APPLICATION

(11) **EP 2 746 683 A1**
(43) Date of publication of application: **25.06.2014**
(21) Application number: 12824653.5
(22) Date of filing: 10.08.2012
(51) Int. Cl.: F24D 3/16, F24D 19/00

(54) **RADIATION PANEL DEVICE**

(30) Priority: 17.08.2011 JP 2011178419
(71) Applicant: Asahi Kasei Homes Corporation, Tokyo 160-8345 (JP); Sankyo Tateyama, Inc., Toyama 933-8610 (JP)
(72) Inventor: MATSUDA, Katsumi, Tokyo 101-8101 (JP); OHI, Kazuki, Takaoka-City Toyama 933-8610 (JP)
(74) Representative: O'Brien, Simon Warwick
(86) International application number: PCT/JP2012/070542
(87) International publication number: WO 2013/024824

(57) **Abstract**

Among outward path-side extension parts and returning path-side extension parts protruding from panels, an outward path-side extension part and a returning path-side extension part installed at the same side with respect to a rotary shaft are connected. That is, the outward path-side extension part and returning path-side extension part extracted via extraction tube sections are connected without variation in distance before and after swing of a panel.

## Description

### Technical Field

The present invention relates to a radiation panel device configured to perform radiant heating or radiant cooling.

### Background Art

Conventionally, a radiation panel device including a plurality of panels through which a heating medium in a liquid state, such as water or the like, can flow is known. In such a radiation panel device, emissivity can be maintained in the panels by circulating the heating medium between the plurality of panels and a heat source installed separately therefrom, and air conditioning of a living room or the like can be performed by radiant heating or radiant cooling by the panel. For example, Patent Document 1 discloses a radiation panel device in which a heating medium flow pipe, configured to flow a heating medium, is installed in a panel and radiant heat is radiated from the panel by flowing the heating medium through the heating medium flow pipe.

### Citation List

### Patent Documents

[Patent Document 1] Japanese Unexamined Patent Application, Publication No. 2010-243127

### Summary of Invention

### Technical Problem

In order to change a direction of wind flowing between the panels or block a line of sight between a far side of the panel and a close side, the panels of the radiation panel device need to be swingable. However, the panels of the radiation panel device disclosed in Patent Document 1 are not assumed to be swingable to begin with. For this reason, the radiation panel device disclosed in Patent Document 1 does not have a configuration for swinging the panels, and further, does not have a configuration of piping that would enable the panels to swing.

Here, in order to solve these problems, the object of the present invention is to provide a radiation panel device with swingable panels.

### Solution to Problem

In order to solve these problems, a radiation panel device that is one aspect of the present invention is constituted such that one end of a plurality of long panels having heating medium flow pipes, flowing with a heating medium composed of a fluid, inserted is connected by a bridge, conferring emissivity to each of the panels by circulating the heating medium between a heat source and the heating medium flow pipe of each panel, wherein the plurality of panels, in addition to having rotary shafts and each being swingably supported by the bridge, are linked to swing in the same direction; each heating medium flow pipe inserted into the plurality of panels comprises a pair of extension parts protruding from one end of the panel to oppose each other with an axis of the rotary shaft of the panel interposed therebetween; and a serial piping system is formed by connecting the one extension part of one of the panels and, from among of the pair of extension parts of the panel other than the one panel, the extension part disposed, with respect to the rotary shaft of said other panel, on the same side as the side whereon the one extension part is disposed, with respect to the rotary shaft of the one panel.

Accordingly, the extension parts of the heating medium flow pipes protruding from the panels are connected to the extension parts disposed at the same side with respect to the rotary shaft of the panel. When the panels of the radiation panel device are linked together and swung in the same direction, positions of the extension parts disposed on the same side with respect to the rotary shaft of the panel vary according to the swing while constantly maintaining an interval between the extension parts. That is, positions of the connected extension parts are varied according to the swing while maintaining a constant interval among the extension parts. In this way, as the extension parts are connected without variation in interval before and after swinging, for example, the panels can be swung in a state in which the extension parts are connected, without restriction of the swing of the panel by the connected extension parts.

In addition, it is preferable to have a parallel piping group provided with a plurality of serial piping systems, and comprising the serial piping systems disposed in parallel. In the radiation panel device, the panels can be swung while supplying the heating medium to the serial piping system mutually disposed in parallel.

In addition, it is preferable that the parallel piping group, in addition to connecting the serial piping systems in parallel, comprises a header part supplying the heating medium from the heat source to the serial piping systems connected in parallel, and that the header part be movable with respect to the bridge in accordance with swinging of the panel. In the radiation panel device, since the header part is freely movable, even when positions of the extension parts of the heating medium flow pipes are varied according to the swing of the panels, positions of the header parts can be varied according to variation in positions of the extension parts. Accordingly, excessive expansion and contraction of the extension part connected to the header part according to the swing of the panel can be suppressed.

In addition, it is preferable that the plurality of serial piping systems comprise a first group inducing the heating medium to flow between each of the panels from one side toward the other side in a longitudinal direction of the bridge, and a second group inducing the heating medium to flow between each of the panels from the other side toward the one side in the longitudinal direction of the bridge. In the radiation panel device, the heating medium can flow between the panels from two opposite directions with respect to the panels disposed side-by-side in a longitudinal direction of the bridge. Accordingly, generation of a temperature gradient of all of the plurality of panels can be suppressed.

In addition, it is preferable that the panels belonging to the first group and the panels belonging to the second group are alternately provided. In the radiation panel device, the panel having a low temperature among the panels belonging to the second group is disposed adjacent to the panel having a high temperature among the panels belonging to the first group. Further, in the radiation panel device, the panel having a high temperature among the panels belonging to the second group is disposed adjacent to the panel having a low temperature among the panels belonging to the first group. Accordingly, the temperature gradient of all of the plurality of panels can be further reduced.

### Advantageous Effects of Invention

According to an aspect of the present invention, it is possible to swing the panels of the radiation panel device.

### Brief Description of Drawings

FIG. 1 is a perspective view illustrating a state in which a radiation panel device according to an embodiment of the present invention is installed;
FIG. 2 is a perspective view schematically illustrating the entire radiation panel device according to the embodiment;
FIG 3 is a side view illustrating a periphery of a bridge of the radiation panel device according to the embodiment;
FIG. 4 is a top view of the radiation panel device according to the embodiment;
FIG. 5 is a cross-sectional view taken along line V-V of FIG. 3;
FIG. 6 is a perspective view illustrating a first slide connecting plate of the radiation panel device according to the embodiment;
FIG. 7 is a side view of the radiation panel device according to the embodiment when seen in an extending direction of the bridge;
FIG. 8 is an exploded perspective view illustrating a state in which extension parts of a heating medium flow pipe are connected using a pipe connecting section;
FIG. 9 is a view schematically illustrating the connected state of the heating medium flow pipe;
FIG. 10 is a view illustrating a flow of a heating medium of serial piping systems, (a) illustrating a flow of a first serial piping system, and (b) illustrating a flow of a second serial piping system;
FIG. 11 is a view illustrating a flow of the heating medium of the serial piping systems, (a) illustrating a flow of a third serial piping system, and (b) illustrating a flow of a fourth serial piping system; and FIG. 12 is a view illustrating a swinging state of the panels.

### Description of Embodiments

Hereinafter, an embodiment of the present invention will be described with reference to the accompanying drawings. Note that in the description, the same components are designated by the same reference numerals and overlapping description thereof will be omitted.

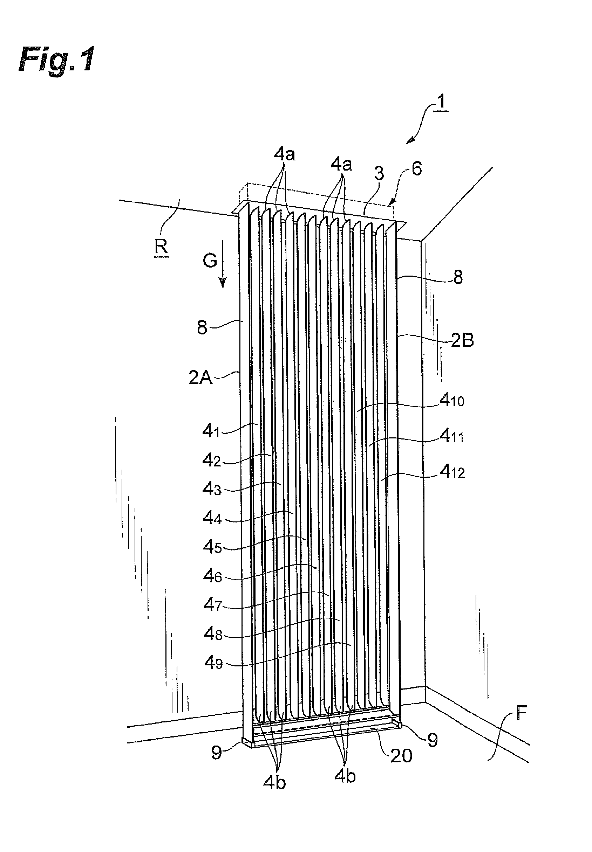

As shown in FIG. 1, a radiation panel device 1 is a radiation device installed at a corner of a living room of a building to perform radiant heating or radiant cooling, and is configured to include a pair of supports 2A and 2B disposed between a ceiling board R and a floorboard F of the living room and installed in a vertical direction, a bridge 3 spanning upper ends of the pair of supports 2A and 2B, a plurality of long panels 4₁ to 4₁₂ having upper ends supported by the bridge 3, and a condensation water receiving member 20 installed under the panels 4₁ to 4₁₂ and on the floorboard F and configured to catch condensation water.

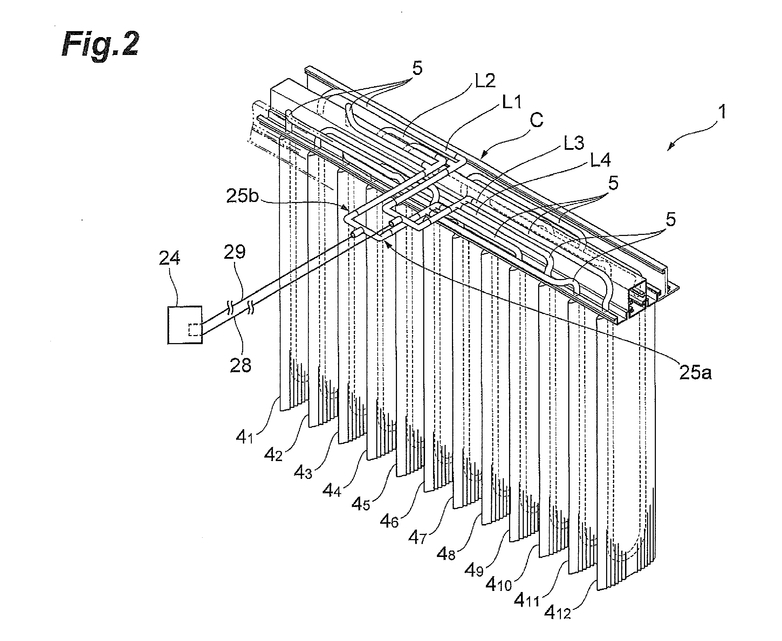

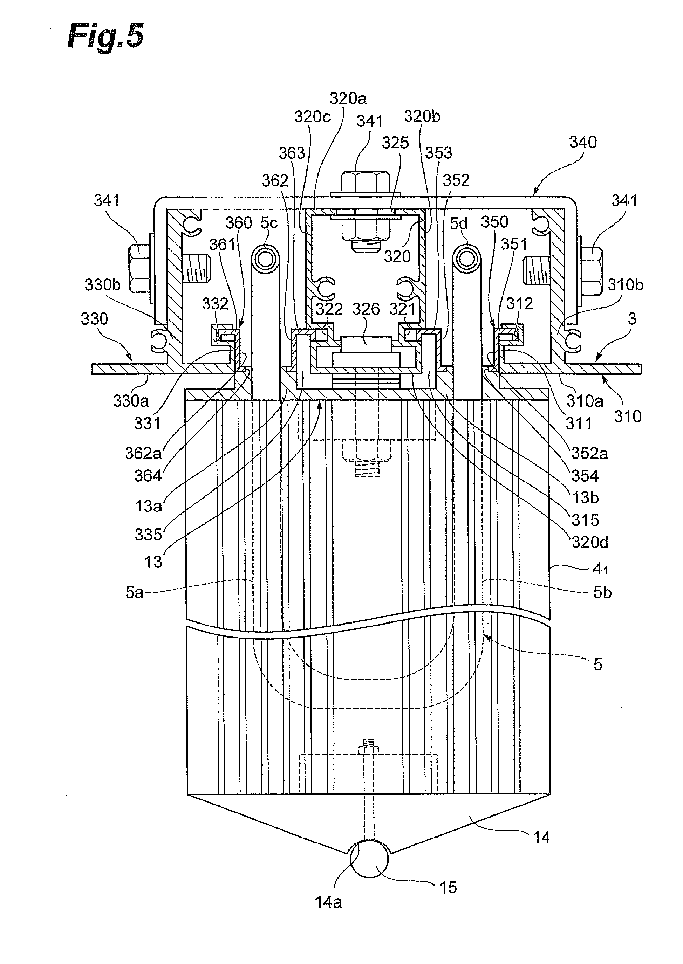

As shown in FIG. 5, a heating medium flow pipe 5 having an outward path 5a through which a heating medium supplied from the heat source 24 (see FIG 2) flows from an upper end 4a of the panel 4₁ toward a lower end 4b and a returning path 5b connected to the outward path 5a at the lower end 4b side of the panel 4₁ and through which the heating medium flows from the lower end 4b side toward the upper end 4a is inserted into the panel 4₁. Accordingly, the heating medium, to which an amount of heat sufficient for producing a predetermined temperature is applied by heating or cooling at the heat source 24, flows through the outward path 5a and then flows through the returning path 5b, thereby flowing through the panel 4₁ from one end 4a toward the other end 4b, and then flows from the other end 4b toward the one end 4a. Like the panel 4₁, the heating medium flow pipe 5 having the outward path 5 a and the returning path 5b is also inserted into the panels 4₂ to 4₁₂, and the heating medium flows into the panels 4₂ to 4₁₂. The heating medium supplied from the heat source 24 to the panels 4₁ to 4₁₂ flows through the panels 4₁ to 4₁₂ and then returns to the heat source 24 to be collected.

Accordingly, emissivity is gradually conferred to the panels 4₁ to 4₁₂ of the radiation panel device 1, as the heating medium is repeatedly circulated between the heat source 24 and the panels 4₁ to 4₁₂, and radiant heating or radiant cooling of a living room can be performed by radiating radiant heat from the panels 4₁ to 4₁₂.

Returning to FIG 1, each of the supports 2A and 2B includes a support main body 8 having a length extending from the floorboard F to the ceiling board R and a pedestal member 9 fitted onto a lower end of the support main body 8 and fastened to the floorboard F, and is stood up while fixed to the floorboard F.

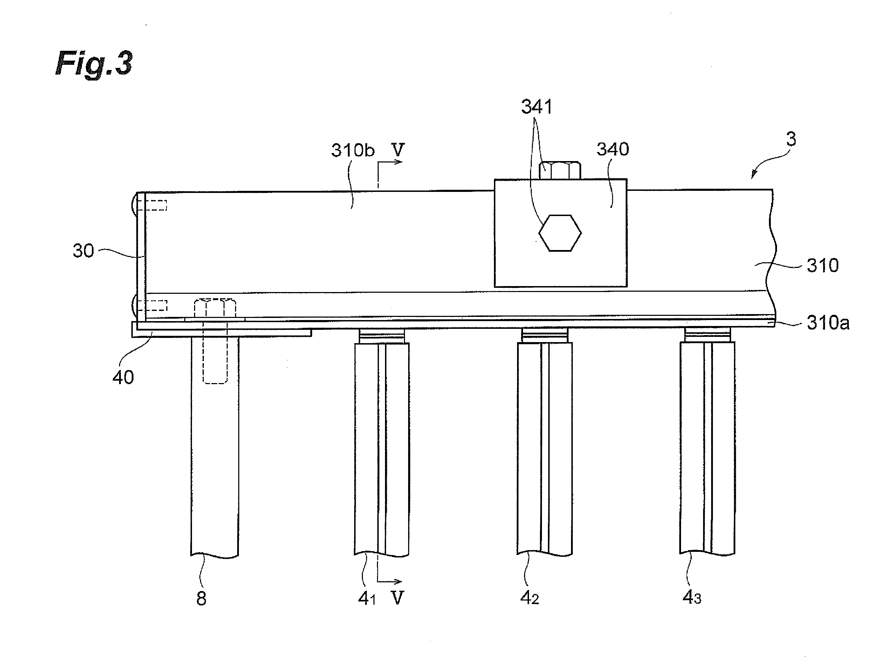

As shown in FIGS. 3 to 5, the bridge 3 includes a first side frame 310, a central frame 320, a second side frame 330, a reinforcement member 340, a first slide connecting plate (a guide unit, a first guide unit) 350, and a second slide connecting plate (a guide unit, a second guide unit) 360. The first side frame 310, the central frame 320, the second side frame 330, the first slide connecting plate 350, and the second slide connecting plate 360 form an elongated shape, and are disposed in the same extending direction.

The central frame 320 is disposed between the first side frame 310 and the central frame 320. In addition, gaps having a predetermined width are formed between the first side frame 310 and the central frame 320 and between the second side frame 330 and the central frame 320.

The reinforcement member 340 is disposed to cross the first side frame 310, the central frame 320, and the second side frame 330. The first side frame 310, the central frame 320, and the second side frame 330 are fixed to the reinforcement member 340 by bolts 341. In addition, a plurality of reinforcement members 340 formed in short and small pieces are installed and fix the first side frame 310, the central frame 320, and the second side frame 330 at a plurality of places.

The central frame 320 forms a substantially rectangular pipe shape, and has an upper surface 320a in which a slit 325 extending in the extending direction of the central frame 320 is formed. The central frame 320 is formed by extruding a metal such as aluminum, stainless steel, or the like. The bolt 341 configured to fix the central frame 320 to the reinforcement member 340 passes through the slit 325.

The panels 4₁ to 4₁₂ are swingably attached to a lower surface 320d of the central frame 320 by a plurality of bolts 326. That is, the panels 4₁ to 4₁₂ are swung about the bolts 326, which serve as axial centers. Note that the panels 4₁ to 4₁₂ are axially supported to be swingable about the central frame 320 by the bolt 326 at a central position in a widthwise direction of each panel (leftward and rightward directions of FIG. 5).

In addition, the panels 4₁ to 4₁₂ are connected by a panel connection swing mechanism (not shown), and all of the panels 4₁ to 4₁₂ can be simultaneously swung in the same direction by manipulating the panel connection swing mechanism.

A first central recessed section 321 extending in a longitudinal direction of the central frame 320 is formed at a side surface 320b, which, of the side surfaces 320b and 320c of the central frame 320, is on the first side frame 310 side. A second central recessed section 322 extending in the longitudinal direction of the central frame 320 is formed at the side surface 320c which, of the side surfaces 320b and 320c of the central frame 320, is on the second side frame 330 side. The first central recessed section 321 and the second central recessed section 322 are recessed toward the inside of the central frame 320.

The first side frame 310 includes a bottom plate section 310a expanding in a horizontal direction, and a rib wall 310b installed to stand up on the bottom plate section 310a. The first side frame 310 is formed by extruding a metal such as aluminum, stainless steel, or the like. The bottom plate section 310a is fixed to the ceiling board R by a screw or the like. The rib wall 310b is fixed to the reinforcement member 340 by the bolt 341. A stand-up wall 311 is formed at an end section of the bottom plate section 310a near the central frame 320. A first side recessed section 312 extending in a longitudinal direction of the first side frame 310 is formed at the stand-up wall 311. The first side recessed section 312 has a shape in which the stand-up wall 311 is recessed toward the rib wall 310b. A height position at which the first side recessed section 312 is provided is equal to a height position of the first central recessed section 321 provided at the side surface 320b of the central frame 320. A groove 315 is formed between the stand-up wall 311 and the side surface 320b of the central frame 320.

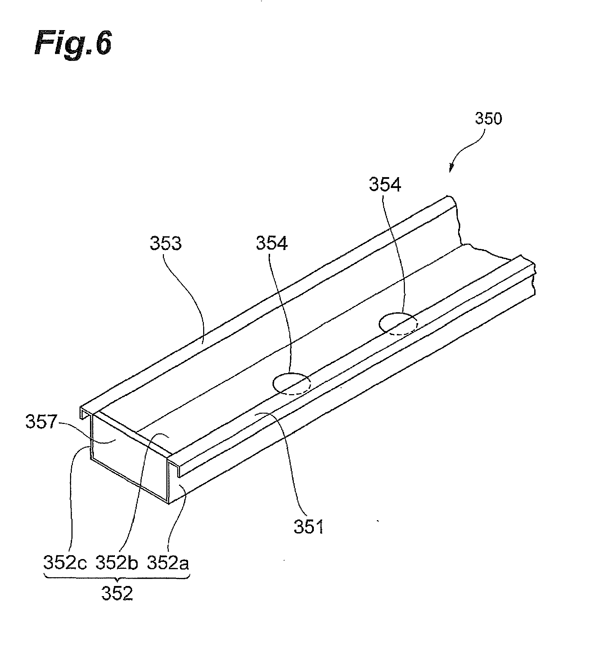

The first slide connecting plate 350 is movably housed in the groove 315. The first slide connecting plate 350 includes flange sections 351 and 353, and a main body section 352. In particular, as shown in FIG 6, the main body section 352 includes a bottom wall 352b and sidewalls 352a and 352c standing up from both end sections of the bottom wall 352b, and forms a recessed shape. In addition, a plurality of holes 354 are formed in the bottom wall 352b of the first slide connecting plate 350 in the longitudinal direction of the first slide connecting plate 350 at equal intervals. The flange section 351 is connected to an upper end section of the sidewall 352a of the main body section 352 and extends toward the first side frame 310. The flange section 353 is connected to an upper end section of the sidewall 352c of the main body section 352 and extends toward the central frame 320.

As shown in FIG. 5, the flange section 351 of the first slide connecting plate 350 is slidably housed in the first side recessed section 312 of the first side frame 310. In addition, the flange section 353 of the first slide connecting plate 350 is slidably housed in the first central recessed section 321 of the central frame 320.

The first slide connecting plate 350 is movable in the longitudinal direction of the groove 315 in a state in which the flange section 351 and the flange section 353 are housed in the first side recessed section 312 and the first central recessed section 321, respectively. In this way, the first side recessed section 312 and the first central recessed section 321 extending in the longitudinal direction of the bridge 3 function as a first defining section (a guide unit, a first guide unit, or a defining unit) configured to define movement in the longitudinal direction of the groove 315 in the first slide connecting plate 350.

In addition, a length from a bottom surface of the first side recessed section 312 to a bottom surface of the first central recessed section 321 is longer than that from an end of the flange section 351 to an end of the flange section 353. That is, the first slide connecting plate 350 is movable in a widthwise direction (leftward and rightward directions of FIG 5) of the groove 315 in a state in which the flange section 351 and the flange section 353 are housed in the first side recessed section 312 and the first central recessed section 321. In this way, the first side recessed section 312 and the first central recessed section 321 in which the length from the bottom surface of the first side recessed section 312 to the bottom surface of the first central recessed section 321 is set to be larger than that from the end of the flange section 351 to the end of the flange section 353 function as a second defining section (a guide unit, a first guide unit, or a defining unit) configured to define movement in a direction perpendicular to the longitudinal direction of the groove 315 in the first slide connecting plate 350. The second defining section defines movement of the first slide connecting plate 350 such that the flange sections 351 and 353 do not fall from the inside of the first side recessed section 312 and the inside of the first central recessed section 321, respectively.

In addition, an outer surface of the sidewall 352a of the first slide connecting plate 350 rubs against the stand-up wall 311 when the panels 4₁ to 4₁₂ are disposed at normal positions (to be described in detail hereafter). That is, the sidewall 352a configures a rubbing board rubbing against the stand-up wall 311. As the sidewall 352a rubs against the stand-up wall 311, positions of the panels 4₁ to 4₁₂ are releasably fixed. That is, the stand-up wall 311 and the sidewall 352a function as a brake unit configured to releasably fix the positions of the panels 4₁ to 4₁₂.

Like the first side frame 310, the second side frame 330 also includes a bottom plate section 330a expanding in a horizontal direction and a rib wall 330b installed to stand up on the bottom plate section 330a. A stand-up wall 331 is formed at an end section of the bottom plate section 330a near the central frame 320. Like the first side recessed section 312, a second side recessed section 332 extending in the longitudinal direction of the second side frame 330 is formed at the stand-up wall 331. A groove 335 is formed between the stand-up wall 331 and the side surface 320c of the central frame 320.

The second slide connecting plate 360 is movably housed in the groove 335. Like the first slide connecting plate 350, the second slide connecting plate 360 includes flange sections 361 and 363, and a main body section 362. In addition, like the first slide connecting plate 350, a plurality of holes 364 are formed in parallel in the main body section 362 in the longitudinal direction of the second slide connecting plate 360 at equal intervals.

The flange section 361 of the second slide connecting plate 360 is slidably housed in the second side recessed section 332 of the second side frame 330. In addition, the flange section 363 of the second slide connecting plate 360 is slidably housed in the second central recessed section 322 of the central frame 320.

The second slide connecting plate 360 is movable in the longitudinal direction of the groove 335 in a state in which the flange section 361 and the flange section 363 are housed in the second side recessed section 332 and the second central recessed section 322, respectively. In this way, the second side recessed section 332 and the second central recessed section 322 extending in the longitudinal direction of the bridge 3 function as a first defining section (a guide unit, a second guide unit, or a defining unit) configured to define movement in the longitudinal direction of the groove 335 of the second slide connecting plate 360.

In addition, a length from a bottom surface of the second side recessed section 332 to a bottom surface of the second central recessed section 322 is larger than that from an end of the flange section 361 to an end of the flange section 363. That is, the second slide connecting plate 360 is movable in a widthwise direction (leftward and rightward directions of FIG. 5) of the groove 335 in a state in which the flange section 361 and the flange section 363 are housed in the second side recessed section 332 and the second central recessed section 322. In this way, the second side recessed section 332 and the second central recessed section 322, in which the length from the bottom surface of the second side recessed section 332 to the bottom surface of the second central recessed section 322 is longer than that from the end of the flange section 361 to the end of the flange section 363, function as a second defining section (a guide unit, a second guide unit, or a defining unit) configured to define movement in a direction perpendicular to the longitudinal direction of the groove 335 of the second slide connecting plate 360. The second defining section defines movement of the second slide connecting plate 360 such that the flange sections 361 and 363 do not fall from the inside of the second side recessed section 332 and the inside of the second central recessed section 322, respectively.

In addition, a sidewall 362a of the second slide connecting plate 360 opposite to the stand-up wall 331 of the main body section 362 rubs against the stand-up wall 331 when the panels 4₁ to 4₁₂ are disposed at normal positions (to be described in detail hereafter). That is, the sidewall 362a configures a rubbing board rubbing against the stand-up wall 331. As the sidewall 362a rubs against the stand-up wall 331, positions of the panels 4₁ to 4₁₂ are releasably fixed. That is, the stand-up wall 331 and the sidewall 362a function as a brake unit configured to releasably fix the positions of the panels 4₁ to 4₁₂.

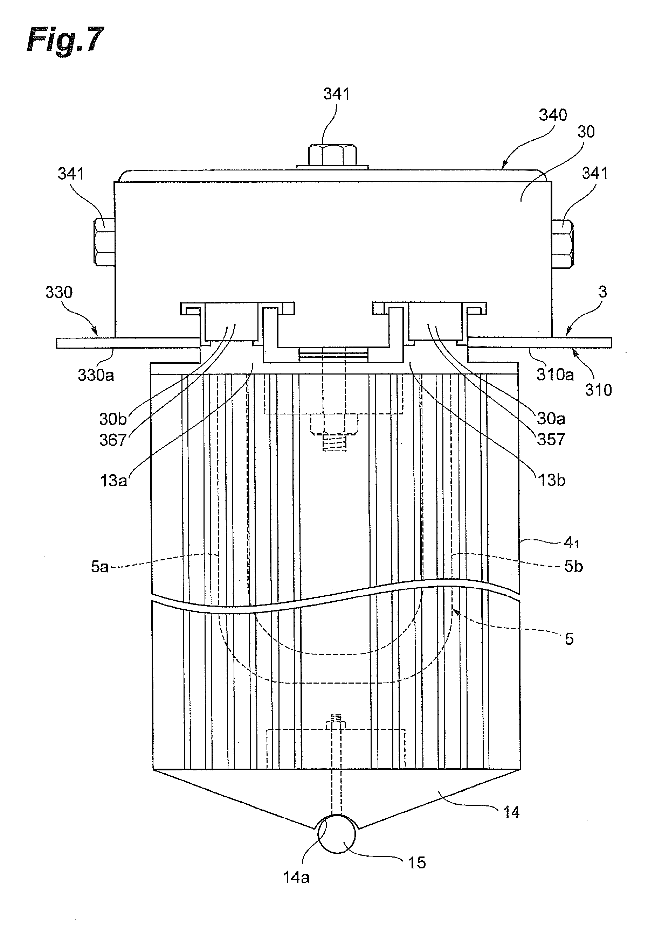

As shown in FIG. 7, bridge covers 30 configured to respectively cover both end sections in the longitudinal direction of the bridge 3 are installed at the bridge 3. Opening sections 30a and 30b configured to prevent interference with the bridge cover 30 when the first slide connecting plate 350 and the second slide connecting plate 360 are slid in the longitudinal direction of the grooves 315 and 335 are formed in the bridge cover 30.

In addition, connecting plate covers 357 and 367, configured to cover the main body section 352 of the first slide connecting plate 350 and the main body section 362 of the second slide connecting plate 360, are also respectively installed at both end sections in the longitudinal direction of the first slide connecting plate 350 and the second slide connecting plate 360. Accordingly, even when water such as condensation water or the like gathers on the main body section 352 of the first slide connecting plate 350 and the main body section 362 of the second slide connecting plate 360, the water does not drop from the end sections of the first slide connecting plate 350 and the second slide connecting plate 360. The water gathering in the main body sections of the first slide connecting plate 350 and the second slide connecting plate 360 moves along the panels 4₁ to 4₁₂ from holes 354 and 364 to drop into the condensation water receiving member 20 from the lower ends of the panels 4₁ to 4₁₂.

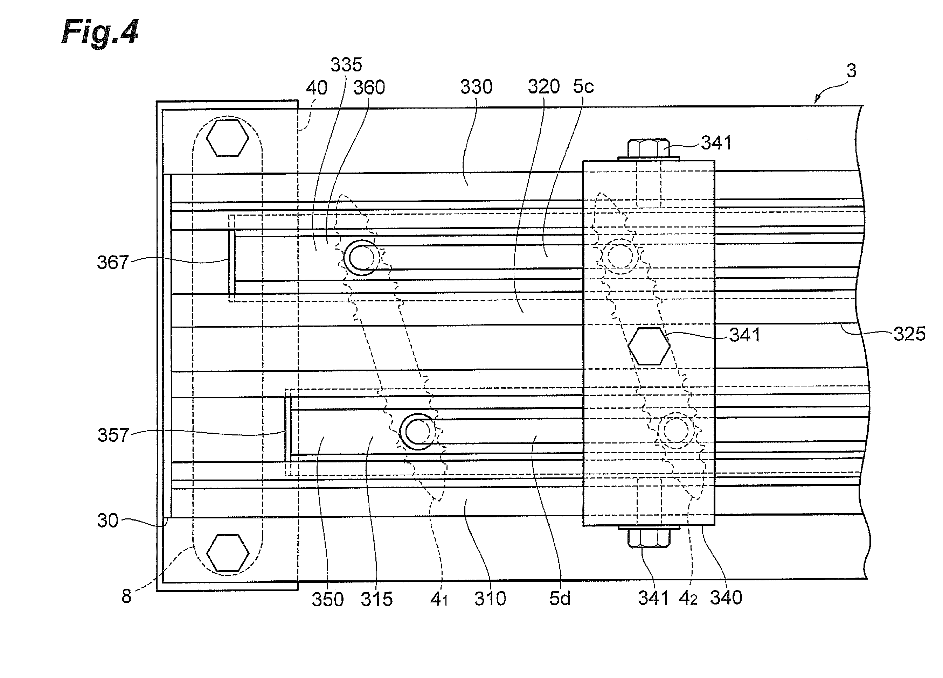

In addition, as shown in FIGS. 3 and 4, a groove cover 40 configured to cover the grooves 315 and 335 is installed at an end in the longitudinal direction of the bridge 3 near the panel 4₁. The groove cover 40 extends from the end section of the bridge 3 toward the panel 4₁ such that an outward path-side extension part 5c or a returning path-side extension part 5d is not interfered with when the panel 4₁ is swung. Accordingly, when the bridge 3 is seen from a lower side thereof, the gap formed in the end section of the bridge 3 by the grooves 315 and 335 can be covered. Similarly, a groove cover is also formed at an end in the longitudinal direction of the bridge 3 near the panel 4₁₂, and a gap formed by the grooves 315 and 335 is covered by the groove cover. In addition, due to the swing of the panels 4₁ to 4₁₂, one of the two gaps (the gaps formed by the grooves 315 and 335) covered by the groove cover 40, becomes larger and the other becomes smaller. The groove cover 40 covers the gaps such that the gaps are not seen even when sizes of the gaps vary according to the swing of the panels 4₁ to 4₁₂.

In addition, the groove cover 40 and the support main body 8 are installed at the lower surface sides of the bottom plate sections 310a and 330a of the side frames 310 and 330. Slide connecting plates 350 and 360 are disposed over the lower surfaces of the bottom plate sections 310a and 330a of the side frames 310 and 330 (see FIG. 5). Therefore, even when the slide connecting plates 350 and 360 are slid in the grooves 315 and 335, the slide connecting plates 350 and 360 can slide without interference with the groove cover 40 and the support main body 8.

The panels 4₁ to 4₁₂ are long hollow members extending in a vertical direction and having a flat cross-section, and are formed by, for example, extruding a metal such as aluminum, stainless steel, or the like. The heating medium flow pipe 5 configured to circulate a heating medium composed of a fluid, for example, an anti-freezing solution or water, is inserted into the panels 4₁ to 4₁₂. Upper panel caps 13 are attached to the upper ends of the panels 4₁ to 4₁₂. The panels 4₁ to 4₁₂ are swingably attached to the bridge 3 by the bolt 326 via the upper panel cap 13.

Extraction tube sections 13a and 13b configured to extract the outward path-side extension part 5c and the returning path-side extension part 5d of the heating medium flow pipe 5 inserted into the panels 4₁ to 4₁₂ to the outside are installed at the upper panel cap 13 attached to the panels 4₁ to 4₁₂, respectively. The end sections of the extraction tube sections 13a and 13b are swingably inserted into a hole 364 of the second slide connecting plate 360 and a hole 354 of the first slide connecting plate 350, respectively. Accordingly, movement of the heating medium flow pipe 5 is guided by the first slide connecting plate 350 and the second slide connecting plate 360.

A lower panel cap 14 is attached to the lower ends of the panels 4₁ to 4₁₂. The lower panel cap 14 is formed in a triangular shape having a tip portion at a lower side thereof. In the lower surface of the lower panel cap 14, an arc-shaped recessed section 14a is formed at the tip portion of the triangular shape. In addition, a discharge hole configured to discharge condensation water generated in the panels 4₁ to 4₁₂ is formed at the lower surface of the lower panel cap 14. It is preferable that the discharge hole be formed at a position near the recessed section 14a. A connecting pipe 15 is disposed in the concave section 14a of the lower panel cap 14 of each of the panels 4₁ to 4₁₂. The connecting pipe 15 is attached to the panels 4₁ to 4₁₂ by a bolt inserted from lower sides of the panels 4₁ to 4₁₂. The panels 4₁ to 4₁₂ are connected by the connecting pipe 15. In addition, in a state in which the connecting pipe 15 is attached to the lower ends of the panels 4₁ to 4₁₂, each of the panels 4₁ to 4₁₂ is swingable with the bolt 326 of the upper end side as an axis.

The condensation water receiving member 20 is disposed under the panels 4₁ to 4₁₂ to receive condensation water from the panels 4₁ to 4₁₂. The condensation water receiving member 20 is linked with a drain pipe and the condensation water flows downward along the panels 4₁ to 4₁₂ to be gathered at the condensation water receiving member 20 to be discharged to the outside through the drain pipe.

The heating medium flow pipe 5, inserted into the panels 4₁ to 4₁₂, is bent in substantially a U shape and is housed in the panel, and has the outward path 5a extending in an extending direction G of the panels 4₁ to 4₁₂ and the returning path 5b connected to the outward path 5a and extending in a direction opposite to the extending direction G of the panels 4₁ to 4₁₂, which are bent (curved) in a U shape at the lower end side of the panel. The heating medium flow pipe 5 is, for example, constituted by a resin pipe having an inner diameter d of 8 mm or less. By using a heating medium flow pipe 5 formed of a resin, good flexibility is provided, the pipe can be bent to a small radius, and machining of the heating medium flow pipes 5 and assembly to the panels 4₁ to 4₁₂ can be easily performed. In the embodiment, while a crosslinked polyethylene pipe is used as the resin pipe, another polyolefm-based resin material such as a polybutene pipe or the like may be adopted.

The outward path 5a and the returning path 5b of the heating medium flow pipe 5 include the outward path-side extension part 5c and the returning path-side extension part 5d, respectively, extending over upper edges of the panels 4₁ to 4₁₂. In addition, the inside of the bridge 3 is a pipe connecting section 6 (see FIG. 1) configured to connect the heating medium flow pipes 5. In the pipe connecting section 6, the outward path-side extension part 5c and the returning path-side extension part 5d of each of the heating medium flow pipes 5 are connected to the returning path-side extension part 5d and the outward path-side extension part 5c of another heating medium flow pipe 5, respectively.

In the pipe connecting section 6, the plurality of heating medium flow pipes 5 form a flow path (a parallel piping group) C (see FIG. 2), and the flow path C includes first to fourth serial piping systems L1, L2, L3 and L4 disposed side-by-side and configured to integrally connect the plurality of heating medium flow pipes 5. Heating medium introduction-side end sections of the serial piping systems L1 to L4 are connected to an introduction side parallel connecting section 25a configured to bundle the serial piping systems L1 to L4, and heating medium discharge-side end sections of the serial piping systems L1 to L4 are connected to a discharge side parallel connecting section 25b configured to bundle the serial piping systems L1 to L4. The parallel connecting sections 25a and 25b are connected to the heat source 24 via an introduction pipe 28 and a discharge pipe 29. The introduction side parallel connecting section 25a evenly discharges the heating medium introduced from the heat source 24 via the introduction pipe 28 to the first to fourth serial piping systems L1 to L4.

In addition, the pipe connecting section 6 includes a plurality of joints 7 configured to connect the outward path-side extension part 5c of one heating medium flow pipe 5 and the returning path-side extension part 5d of the other heating medium flow pipe 5 to form the serial piping systems L1 to L4.

The joint 7 connects the outward path-side extension part 5c of the one heating medium flow pipe 5 and the returning path-side extension part 5d of the other heating medium flow pipe 5, and as a result, the one joint 7 serially connects the two different heating medium flow pipes 5.

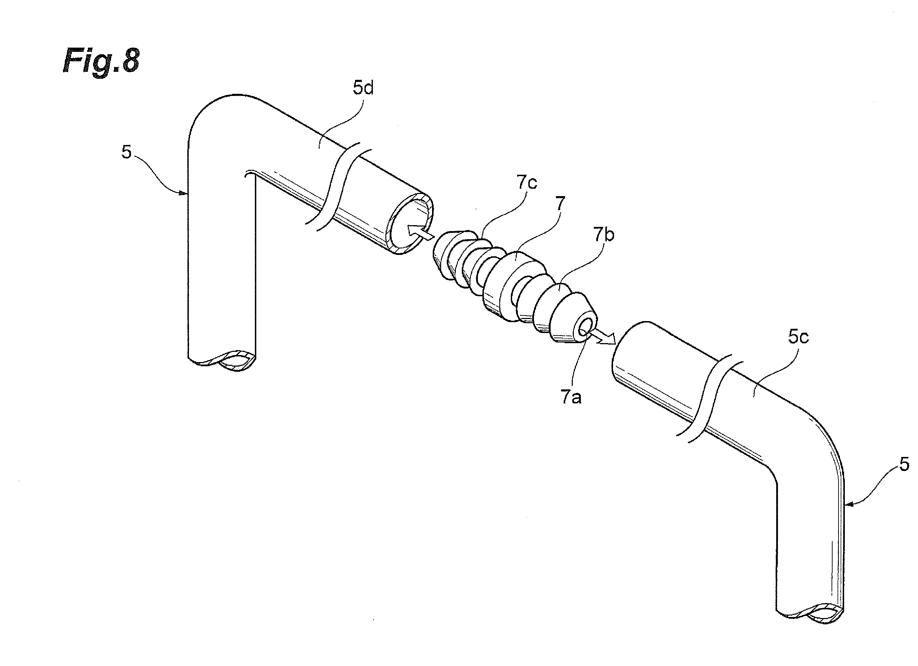

As shown in FIG. 8, the joint 7 is formed of a metal such as copper or the like or hard plastic having corrosion resistance, and has a through-hole 7a formed therein. An extraction-prevention groove is formed at outer circumferences of both ends 7b and 7c of the joint 7. Both of the ends 7b and 7c of the joint 7 are inserted into the outward path-side extension part 5c and the returning path-side extension part 5d, respectively, of the heating medium flow pipes 5 to link with the heating medium flow pipes 5.

In the embodiment, the twelve heating medium flow pipes 5 are divided into four sets, and the first to fourth serial piping systems L1 to L4 serially connected by the joint 7 are formed.

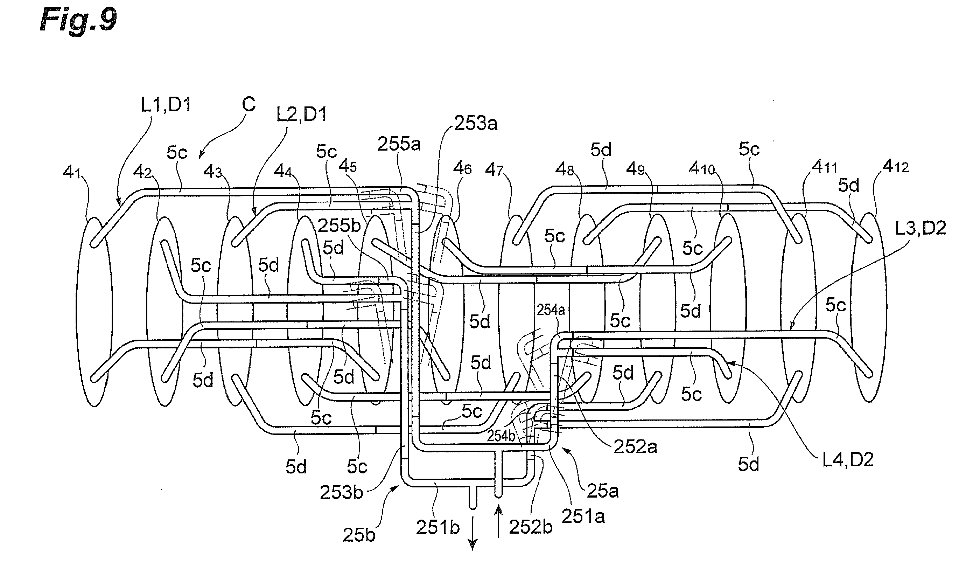

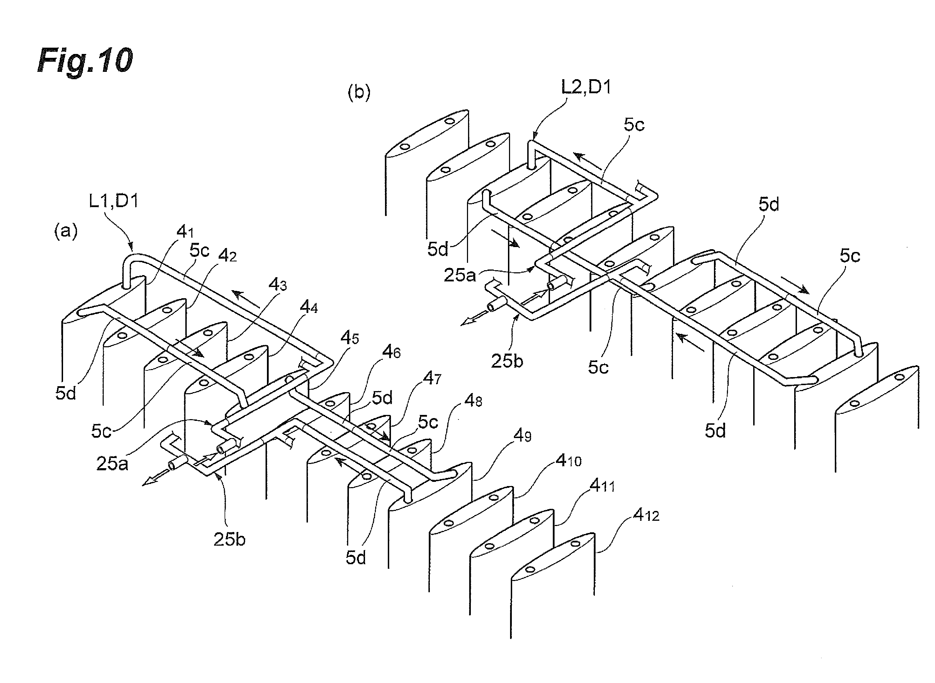

The first to fourth serial piping systems L1 to L4 will be described with reference to FIGS. 9, 10(a) to 10(b) and 11(a) to 11(b). As shown in FIGS. 9 and 10(a), in the first serial piping system L1, the introduction side parallel connecting section 25a and the outward path-side extension part 5c of the heating medium flow pipe 5 inserted into the panel 4₁, which is the first panel from the left side of the drawing, are connected; the returning path-side extension part 5d of the heating medium flow pipe 5 inserted into the panel 4₁ and the outward path-side extension part 5c of the heating medium flow pipe 5 fitted into the panel 4₅, which is the fifth panel from the left, are connected; the returning path-side extension part 5d of the heating medium flow pipe 5 inserted into the panel 4₅ and the outward path-side extension part 5c of the heating medium flow pipe 5 inserted into the panel 4₉, which is the ninth panel from the left, are connected; and the returning path-side extension part 5d of the heating medium flow pipe 5 inserted into the panel 4₉ and the discharge side parallel connecting section 25b are connected.

As shown in FIGS. 9 and 10(b), in the second serial piping system L2, the introduction side parallel connecting section 25a and the outward path-side extension part 5c of the heating medium flow pipe 5 inserted into the panel 4₃, which is the third panel from the left side of the drawing, are connected; the returning path-side extension part 5d of the heating medium flow pipe 5 inserted into the panel 4₃ and the outward path-side extension part 5c of the heating medium flow pipe 5 inserted into the panel 4₇, which is the seventh panel from the left, are connected; the returning path-side extension part 5d of the heating medium flow pipe 5 inserted into the panel 4₇ and the outward path-side extension part 5c of the heating medium flow pipe 5 inserted into the panel 4₁₁, which is the eleventh panel from the left, are connected; and the returning path-side extension part 5d of the heating medium flow pipe 5 inserted into the panel 4₁₁ and the discharge side parallel connecting section 25b are connected.

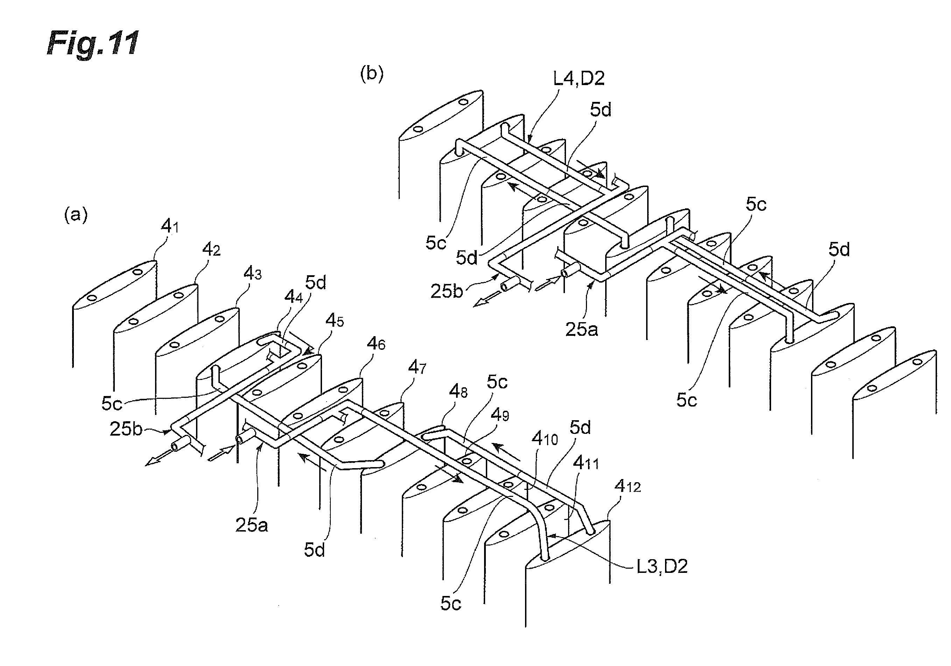

As shown in FIGS. 9 and 11(a), in the third serial piping system L3, the introduction side parallel connecting section 25a and the outward path-side extension part 5c of the heating medium flow pipe 5 inserted into the panel 4₁₂, which is the twelfth panel from the left side of the drawing, are connected; the returning path-side extension part 5d of the heating medium flow pipe 5 inserted into the panel 4₁₂ and the outward path-side extension part 5c of the heating medium flow pipe 5 inserted into the panel 4₈, which is the eighth panel from the left, are connected; the returning path-side extension part 5d of the heating medium flow pipe 5 inserted into the panel 4₈ and the outward path-side extension part 5c of the heating medium flow pipe 5 inserted into the panel 4₄, which is the fourth panel from the left, are connected; and the returning path-side extension part 5d of the heating medium flow pipe 5 inserted into the panel 4₄ and the discharge side parallel connecting section 25b are connected.

As shown in FIGS. 9 and 11(b), in the fourth serial piping system L4, the introduction side parallel connecting section 25a and the outward path-side extension part 5c of the heating medium flow pipe 5 inserted into the panel 4₁₀, which is the tenth panel from the left side of the drawing, are connected; the returning path-side extension part 5d of the heating medium flow pipe 5 inserted into the panel 4₁₀ and the outward path-side extension part 5c of the heating medium flow pipe 5 inserted into the panel 4₆, which is the sixth panel from the left, are connected; the returning path-side extension part 5d of the heating medium flow pipe 5 inserted into the panel 4₆ and the outward path-side extension part 5c of the heating medium flow pipe 5 inserted into the panel 4₂, which is the second panel from the left, are connected; and the returning path-side extension part 5d of the heating medium flow pipe 5 inserted into the panel 4₂ and the discharge side parallel connecting section 25b are connected.

The first and second serial piping systems L1 and L2 form a first group D1 configured to cause the heating medium to flow from the panel 4₁ side toward the panel 4₁₂ between the panels 4₁ to 4₁₂. On the other hand, the third and fourth serial piping systems L3 and L4 form a second group D2 configured to cause the heating medium to flow from the panel 4₁₂ side toward the panel 4₁ between the panels 4₁ to 4₁₂. The panels 4₁, 4₃, 4₅, 4₇, 4₉ and 4₁₁ belonging to the first group D1 and the panels 4₂, 4₄, 4₆, 4₈, 4₁₀ and 4₁₂ belonging to the second group D2 are disposed alternately side-by-side.

In this way, the outward path-side extension part 5c and the returning path-side extension part 5d of the heating medium flow pipe 5 protruding from each of the panels 4₁ to 4₁₂ are connected to be disposed on the same side with respect to the rotary shaft (the rotary shaft about the bolt 326 as an axial center) of each of the panels 4₁ to 4₁₂.

As shown in FIG 9, the introduction side parallel connecting section 25a includes a branch pipe 251a, connecting pipes 252a and 253a, and header parts 254a and 255a. The branch pipe 251a is connected to the introduction pipe 28 (see FIG. 2), which is connected to the heat source 24, and the connecting pipes 252a and 253a. The branch pipe 251a divides the heating medium introduced from the introduction pipe 28 into two lines, and discharges the divided heating medium to the connecting pipes 252a and 253a. The header part 254a is connected to the connecting pipe 252a, the outward path-side extension part 5c of the heating medium flow pipe 5 inserted into the panel 4₁₀, and the outward path-side extension part 5c of the heating medium flow pipe 5 inserted into the panel 4₁₂. The header part 254a divides the heating medium introduced from the connecting pipe 252a into two lines, and discharges the divided heating medium to the outward path-side extension part 5c of the heating medium flow pipe 5 inserted into the panel 4₁₀ and the outward path-side extension part 5c of the heating medium flow pipe 5 inserted into the panel 4₁₂. The header part 255a is connected to the connecting pipe 253a, the outward path-side extension part 5c of the heating medium flow pipe 5 inserted into the panel 4₁, and the outward path-side extension part 5c of the heating medium flow pipe 5 inserted into the panel 4₃. The header part 255a divides the heating medium introduced from the connecting pipe 253a into two lines, and discharges the divided heating medium to the outward path-side extension part 5c of the heating medium flow pipe 5 inserted into the panel 4₁ and the outward path-side extension part 5c of the heating medium flow pipe 5 inserted into the panel 4₃.

Like the introduction side parallel connecting section 25a, the discharge side parallel connecting section 25b includes a branch pipe 251b, connecting pipes 252b and 253b, and header parts 254b and 255b. The header part 254b is connected to the connecting pipe 252b, the returning path-side extension part 5d of the heating medium flow pipe 5 inserted into the panel 4₁₁, and the returning path-side extension part 5d of the heating medium flow pipe 5 inserted into the panel 4₉. The header part 254b collects the heating medium introduced from the returning path-side extension part 5d of the heating medium flow pipe 5 inserted into the panel 4₁₁ and the returning path-side extension part 5d of the heating medium flow pipe 5 inserted into and the panel 4₉ into one line and discharges the collected heating medium to the connecting pipe 252b. The header part 255b is connected to the connecting pipe 253b, the returning path-side extension part 5d of the heating medium flow pipe 5 inserted into the panel 4₂, and the returning path-side extension part 5d of the heating medium flow pipe 5 inserted into the panel 4₄. The header part 254b collects the heating medium introduced from the returning path-side extension part 5d of the heating medium flow pipe 5 inserted into the panel 4₂ and the returning path-side extension part 5d of the heating medium flow pipe 5 inserted into the panel 4₄ into one line, and discharges the collected heating medium to the connecting pipe 253b. The branch pipe 251b is connected to the discharge pipe 29 (see FIG 2), which is connected to the heat source 24, and the connecting pipes 252b and 253b. The branch pipe 251b collects the heating medium introduced from the connecting pipes 252b and 253b into one line, and discharges the collected heating medium to the discharge pipe 29.

In the introduction side parallel connecting section 25a, only the branch pipe 251a is fixed with respect to the bridge 3. Similarly, in the discharge side parallel connecting section 25b, only the branch pipe 251b is fixed with respect to the bridge 3. Accordingly, the header parts 254a and 255a and the header parts 254b and 255b of the introduction side parallel connecting section 25a and the discharge side parallel connecting section 25b are movable with respect to the bridge 3.

Assuming a case where the header parts 254a and 255a and the header parts 254b and 255b were fixed with respect to the bridge 3, if the panels 4₁ to 4₁₂ were to be swung, the swing of the panels 4₁ to 4₁₂ may be interfered with. For example, as the outward path-side extension part 5c of the heating medium flow pipe 5 inserted into the panel 4₁ is connected to the header part 255a, the header part 255a may interfere with the swing of the panel 4₁. Thus, by making the header parts 254a and 255a and the header parts 254b and 255b movable with respect to the bridge 3, as in the embodiment, the header parts 254a and 255a and the header parts 254b and 255b can also be moved with the swing of the panels 4₁ to 4₁₂, and the swing of the panels 4₁ to 4₁₂ is not inhibited.

While the header parts 254a and 255a are moved with respect to the branch pipe 251a (see the header part shown by two-dot chain lines in FIG 9), by using resin pipes having flexibility as the connecting pipes 252a and 253a, positional deviation of the header parts 254a and 255a with respect to the branch pipe 251a can be absorbed in the connecting pipes 252a and 253a. Similarly, by using resin pipes having flexibility as the connecting pipes 252b and 253b, positional deviation of the header parts 254b and 255b with respect to the branch pipe 251b can be absorbed. Note that, pipes formed of an appropriate material such as, for example, a metal pipe, a resin pipe, or the like, may be used as the branch pipes 251a and 251b, and the header parts 254a, 255a, 254b and 255b.

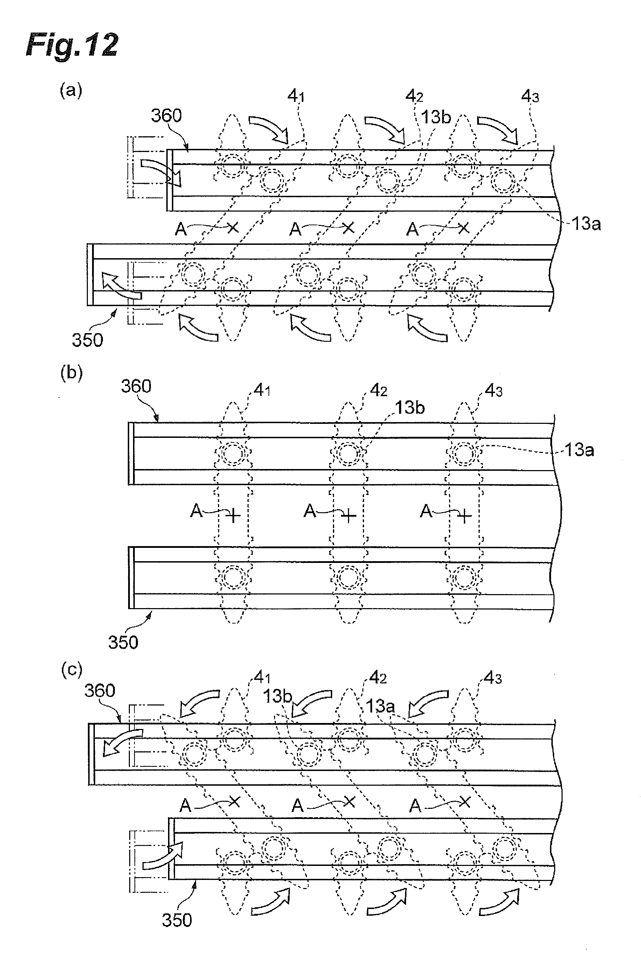

Movement of the first slide connecting plate 350 and the second slide connecting plate 360 when the panels 4₁ to 4₁₂ are swung will be described with reference to FIGS. 12(a) to 12(c). The panels 4₁ to 4₁₂ are swung about a rotary shaft A on an axis of the bolt 326 configured to axially support the panels 4₁ to 4₁₂. In addition, the extraction tube sections 13b and 13a of the upper panel cap 13 installed at the panels 4₁ to 4₁₂ are rotatably inserted into a hole 354 of the first slide connecting plate 350 and a hole 364 of the second slide connecting plate 360. Accordingly, the panels 4₁ to 4₁₂ are connected to each other via the first slide connecting plate 350 and the second slide connecting plate 360, and swing linked together.

When the panels 4₁ to 4₁₂ are swung, the first slide connecting plate 350 and the second slide connecting plate 360 are moved in different directions in the extending directions of the first slide connecting plate 350 and the second slide connecting plate 360, respectively. Further, the first slide connecting plate 350 and the second slide connecting plate 360 are moved in a direction (a direction perpendicular to the extending direction) in which an interval between the first slide connecting plate 350 and the second slide connecting plate 360 is reduced or increased, in addition to movement in the extending direction.

As shown in FIG 12(b), observing the panels 4₁ to 4₁₂ from the bridge 3 side, when the swing positions of the panels 4₁ to 4₁₂ are normal positions at which facing directions of the panels 4₁ to 4₁₂ are perpendicular to the extending directions of the first slide connecting plate 350 and the second slide connecting plate 360, an interval between the first slide connecting plate 350 and the second slide connecting plate 360 is widest.

On the other hand, as shown in FIGS. 12(a) and 12(c), when the panels 4₁ to 4₁₂ are swung about the rotary shaft A, as the panels 4₁ to 4₁₂ are rotated from the normal positions, the interval between the first slide connecting plate 350 and the second slide connecting plate 360 is reduced.

In this way, the first slide connecting plate 350 and the second slide connecting plate 360 are movable in the extending direction and the direction perpendicular to the extending direction. Accordingly, even when the outward path-side extension part 5c and the returning path-side extension part 5d protruding from the panels 4₁ to 4₁₂ are moved in an arc shape as the panels 4₁ to 4₁₂ are swung about the rotary shaft A, the first slide connecting plate 350 and the second slide connecting plate 360 can be moved along with the movement.

Even when the panels 4₁ to 4₁₂ are swung, a distance between the extraction tube sections 13a and 13b disposed at the same side with respect to the rotary shaft A of the panels 4₁ to 4₁₂ is not varied. For example, a distance between the extraction tube section 13b of the upper panel cap 13 installed at the panel 4₂ and the extraction tube section 13a of the upper panel cap 13 installed at the panel 4₃ is not varied before and after the swing of the panels 4₁ to 4₁₂. In addition, as described above, the outward path-side extension part 5c and the returning path-side extension part 5d protruding from each of the panels 4₁ to 4₁₂ are connected to the outward path-side extension part 5c and the returning path-side extension part 5d installed at the same side with respect to the rotary shaft A. Accordingly, as the outward path-side extension part 5c and the returning path-side extension part 5d extracted via the extraction tube sections 13a and 13b having the distance that is not varied before and after the swing are connected, the panels 4₁ to 4₁₂ can be swung.

In the embodiment as configured above, by connecting the outward path-side extension part 5c and the returning path-side extension part 5d extracted via the extraction tube sections 13a and 13b having an interval that is not varied before and after the swing of the panel 4₁ to 4₁₂, for example, the panels 4₁ to 4₁₂ can be swung in a state in which the extension parts 5c and 5d are connected, without restricting the swing of the panel 4₁ to 4₁₂ by the outward path-side extension part 5c and the returning path-side extension part 5d, which are connected.

In addition, in the radiation panel device 1, the panels 4₁ to 4₁₂ can be swung while supplying the heating medium by the plurality of serial piping systems L I to L4 alternately disposed in parallel.

In addition, in the radiation panel device 1, since the header parts 254a and 255a, 254b and 255b are movable with respect to the bridge 3, even when the positions of the outward path-side extension part 5c and the returning path-side extension part 5d of each of the heating medium flow pipes 5 are varied according to the swing of the panels 4₁ to 4₁₂, the positions of the header parts 254a, 255a, 254b and 255b can be varied according to variations of the positions of the extension parts 5c and 5d. Accordingly, excessive expansion and contraction of the extension parts 5c and 5d connected to the header parts 254a, 255a, 254b and 255b according to the swing of the panels 4₁ to 4₁₂ can be suppressed.

The serial piping systems L1 and L2 causes the heating medium to flow between the panels 4₁ to 4₁₂ from the panel 4₁ side toward the panel 4₁₂. In addition, the serial piping systems L3 and L4 cause the heating medium to flow between the panels 4₁ to 4₁₂ from the panel 4₁₂ toward the panel 4₁. That is, the heating medium can be moved from the two directions opposite each other between the panels 4₁ to 4₁₂. Accordingly, generation of a temperature gradient of all of the plurality of panels 4₁ to 4₁₂ can be suppressed.

In the radiation panel device 1, the heating medium is flowed from the panel 4₁ side toward the panel 4₁₂ in the first and second serial piping systems L1 and L2 belonging to the first group D1, and the heating medium is flowed from the panel 4₁₂ side toward the panel 4₁ in the third and fourth serial piping systems L3 and L4 belonging to the second group D2. Further, in the radiation panel device 1, the panels 4₁ to 4₁₂ belonging to the first group D1 and the second group D2 are alternately disposed. Accordingly, the panel having a low temperature among the panels belonging to the second group D2 is disposed adjacent to the panel having a high temperature among the panels belonging to the first group D1. In addition, the panel having a high temperature among the panels belonging to the second group D2 is disposed adjacent to the panel having a low temperature among the panels belonging to the first group D1. Accordingly, the temperature gradient of all of the plurality of panels 4₁ to 4₁₂ can be further reduced.

The embodiment described above is an example of the radiation panel device according to the present invention, and the radiation panel device according to the present invention is not limited to the example described in the embodiment. The radiation panel device according to the present invention may be modified as the radiation panel device according to the embodiment or may be applied to another embodiment without departing from the spirit of the present invention described in the accompanying claims. For example, the number of panels formed in the serial piping system may be two, four, five or more. In addition, a configuration including a header part through which the heating medium flow pipe housed in the panel passes from one end toward the other end of the panel and configured to connect the heating medium flow pipe to both the upper end and the lower end side of the panel may be adopted.

In addition, a building in which the radiation panel device 1 is installed is not limited to a house or an apartment but may be an office building or a public building.

### Industrial Applicability

According to an aspect of the present invention, it is possible to swing the panels of a radiation panel device.

### Reference Numerals

- 1: radiation panel device
- 3: bridge
- 5: heating medium flow pipe
- 5c: outward path-side extension part (extension part)
- 5d: returning path-side extension part (extension part)
- 4₁ to 4₁₂: panel
- 254a, 255a, 254b, 255b: header part
- D1: first group
- D2: second group
- L1 to L4: first to fourth serial piping systems (serial piping system)

## Claims

1. A radiation panel device constituted such that one end of a plurality of long panels inserted with heating medium flow pipes flowing with a heating medium comprising a fluid is connected by a bridge, conferring emissivity to each said panel by circulating the heating medium between a heat source and the heating medium flow pipe of each said panel, wherein
the plurality of panels have rotary shafts, and in addition to each being swingably supported by the bridge, are linked to swing in the same direction;
each heating medium flow pipe inserted into the plurality of panels comprises a pair of extension parts protruding from one end of the panel to oppose each other with an axis of the rotary shaft of the panel interposed therebetween; and
a serial piping system is formed by connecting, one extension part of one of the panels and, from among of the pair of extension parts of a panel other than the one panel, the extension part disposed with respect to the rotary shaft of said other panel on the same side as the side whereon the one extension part is disposed with respect to the rotary shaft of the one panel.

2. The radiation panel device according to claim 1, provided with a plurality of the serial piping systems, and having
a parallel piping group comprising the serial piping systems in parallel.

3. The radiation panel device according to claim 2, wherein the parallel piping group, in addition to connecting the serial piping systems in parallel, comprises a header part supplying the heating medium from the heat source to the serial piping systems connected in parallel and
the header part is movable with respect to the bridge in accordance with swinging of the panel.

4. The radiation panel device according to claims 2 or 3, wherein the plurality of serial piping systems comprise a first group inducing the heating medium to flow between each of the panels from one side toward another side in a longitudinal direction of the bridge, and a second group inducing the heating medium to flow between each of the panels from the other side toward the one side in the longitudinal direction of the bridge.

5. The radiation panel device according to claim 4, wherein the panels belonging to the first group and the panels belonging to the second group are alternately provided.
